(19) Europäisches Patentamt
European Patent Office
Office européen des brevets

(11) **EP 4 231 373 A1**

(12) **EUROPEAN PATENT APPLICATION**

(43) Date of publication:
**23.08.2023  Bulletin 2023/34**

(21) Application number: **23157587.9**

(22) Date of filing: **20.02.2023**

(51) International Patent Classification (IPC):
*H01M 4/04 (2006.01)*       *H01M 4/131 (2010.01)*
*H01M 4/1391 (2010.01)*     *H01M 4/505 (2010.01)*
*H01M 4/36 (2006.01)*       *H01M 4/62 (2006.01)*
*H01M 10/0525 (2010.01)*    *H01M 10/0562 (2010.01)*

(52) Cooperative Patent Classification (CPC):
**H01M 4/366; H01M 4/0419; H01M 4/131;
H01M 4/1391; H01M 4/505; H01M 4/525;
H01M 4/62; H01M 10/0525; H01M 10/0562;**
H01M 2300/0068

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.02.2022  JP 2022025760**

(71) Applicant: **TOYOTA JIDOSHA KABUSHIKI
KAISHA**
**Aichi-Ken 471-8571 (JP)**

(72) Inventor: **KUBOTA, Masaru**
**Toyota-shi, 471-8571 (JP)**

(74) Representative: **D Young & Co LLP**
**120 Holborn**
**London EC1N 2DY (GB)**

(54) **COMPOSITE PARTICLE, POSITIVE ELECTRODE, ALL-SOLID-STATE BATTERY, AND METHOD OF PRODUCING COMPOSITE PARTICLE**

(57)     A composite particle includes a positive electrode active material particle and a coating film. The coating film covers at least part of a surface of the positive electrode active material particle. The coating film includes a phosphorus compound. The composite particle satisfies a relationship of "$C_{Li}/C_P \leq 2.5$". "$C_{Li}$" represents a concentration of Li element measured by XPS. "$C_P$" represents a concentration of P element measured by XPS.

FIG.1

EP 4 231 373 A1

**Description**

This nonprovisional application is based on Japanese Patent Application No. 2022-025760 filed on February 22, 2022, with the Japan Patent Office, the entire contents of which are hereby incorporated by reference.

BACKGROUND

Field

The present disclosure relates to a composite particle, a positive electrode, an all-solid-state battery, and a method of producing a composite particle.

Description of the Background Art

Japanese Patent Laying-Open No. 2012-099323 discloses a coat layer including $Li_3PO_4$.

SUMMARY

Forming a coating film on a surface of a positive electrode active material particle has been suggested. For example, in a sulfide-type all-solid-state battery, such a coating film is expected to inhibit a direct contact between a sulfide-based solid electrolyte and a positive electrode active material particle and thereby decrease initial resistance. However, there is room for improvement in post-endurance-test resistance increment.

An object of the present disclosure is to decrease initial resistance and resistance increment.

Hereinafter, the technical configuration and effects of the present disclosure will be described. It should be noted that the action mechanism according to the present specification includes presumption. The action mechanism does not limit the technical scope of the present disclosure.

1. A composite particle includes a positive electrode active material particle and a coating film. The coating film covers at least part of a surface of the positive electrode active material particle. The coating film includes a phosphorus compound.

The composite particle satisfies a relationship of the following expression (1):

$$C_{Li}/C_P \leq 2.5 \qquad (1)$$

where Li represents a concentration of lithium element calculated from a peak area of a Li 1s spectrum measured by X-ray photoelectron spectroscopy, and $C_P$ represents a concentration of phosphorus element calculated from a peak area of a P 2p spectrum measured by X-ray photoelectron spectroscopy.

Conventionally, a coating film that includes a niobium compound ($LiNbO_3$) is well known. A coating film that includes a niobium compound may be capable of decreasing initial resistance of a battery. However, it tends to have a great post-endurance-test resistance increment.

According to a novel finding of the present disclosure, a coating film that includes a phosphorus compound tends to have a small post-endurance-test resistance increment. However, a conventional film material ($Li_3PO_4$) tends to have a high initial resistance.

A coating film is required to have Li-ion conductivity. The higher the Li-ion conductivity is, the more decreased the initial resistance is expected to be. By using X-ray photoelectron spectroscopy (XPS), it is possible to identify the composition of a particle surface (namely, the composition of the coating film). It seems that a conventional film material ($Li_3PO_4$) has a particle surface composition ratio ($C_{Li}/C_P$) of 3 or more. In general, it is expected that the higher the particle surface composition ratio ($C_{Li}/C_P$) (the richer in Li), the higher the Li-ion conductivity and the lower the initial resistance.

However, according to a novel finding of the present disclosure, when the particle surface composition ratio ($C_{Li}/C_P$) is 2.5 or less, initial resistance may be markedly decreased.

2. The composite particle may have a covering rate of 83% or more, for example. The covering rate is measured by X-ray photoelectron spectroscopy.

The detailed mechanism for the decrease of initial resistance at the time when the expression (1) above is satisfied is unknown. According to a novel finding of the present disclosure, when the expression (1) above is satisfied, the covering rate tends to be high. There is a possibility that the composition ratio ($C_{Li}/C_P$) affects the covering rate and, as a result, causes a decrease of initial resistance.

3. The composite particle may include phosphorus in a mass fraction from 6.1 to 6.5%.

4. A positive electrode includes a composite particle and a sulfide-based solid electrolyte. The composite particle includes a positive electrode active material particle and a coating film. The coating film covers at least part of a surface of the positive electrode active material particle. The composite particle satisfies a relationship of the expression (1) above.

5. The composite particle may have a covering rate of 83% or more, for example. The covering rate is measured by X-ray photoelectron spectroscopy.

6. The composite particle may include phosphorus in a mass fraction from 6.1 to 6.5%, for example.

7. An all-solid-state battery comprises the above-described positive electrode.

8. A method of producing a composite particle comprises the following (a) and (b):

> (a) preparing a mixture by mixing a coating liquid and a positive electrode active material particle; and
> (b) producing a composite particle by drying the mixture.

The coating liquid includes a phosphoric acid compound and a solvent. The phosphoric acid compound includes diphosphorus pentoxide in a mass fraction of 72% or more.

When the coating liquid adhered to the surface of the positive electrode active material particle is dried, a coating film may be produced. The coating liquid includes a phosphoric acid compound. The phosphoric acid compound may be diphosphorus pentoxide ($P_2O_5$). $P_2O_5$ is also called "phosphoric anhydride". The phosphoric acid compound may be a derivative of $P_2O_5$. The derivative of $P_2O_5$ may be produced by reaction between $P_2O_5$ and water (hydrolysis). According to a novel finding of the present disclosure, when the mixture of $P_2O_5$ and water has a $P_2O_5$ mass fraction of 72% or more, the particle surface composition ratio ($C_{Li}/C_P$) is expected to be decreased.

The concentration (mass fraction) of $P_2O_5$ can be measured by a known technique such as absorbance measurement, for example.

9. The phosphoric acid compound may include diphosphorus pentoxide in a mass fraction of 72% or more, with the remainder being made up of water, for example.

10. The phosphoric acid compound may include at least one selected from the group consisting of metaphosphoric acid and polyphosphoric acid, for example.

Metaphosphoric acid [$(HPO_3)_n$] may include $P_2O_5$ in a mass fraction of 89%, with the remainder being made up of water ($H_2O$). Polyphosphoric acid may include $P_2O_5$ in a mass fraction from 72 to 76%, with the remainder being made up of $H_2O$, for example. It should be noted that polyphosphoric acid is a mixture of various phosphoric acid compounds and therefore it is difficult to express polyphosphoric acid by a specific chemical formula.

11. The coating liquid may satisfy a relationship of, for example, the following expression (2):

$$0 \le n_{Li}/n_P < 1.1 \qquad (2)$$

In the expression (2) above, $n_{Li}$ represents a molarity of lithium in the coating liquid, and $n_P$ represents a molarity of phosphorus in the coating liquid.

"$n_{Li}/n_P$" represents the molar ratio (the ratio of amount of substance) of Li to P in the coating liquid. When the molar ratio is less than 1.1, a composite particle that satisfies the expression (1) above tends to be formed. It should be noted that the particle surface composition ratio ($C_{Li}/C_P$) tends to be higher than the molar ratio ($n_{Li}/n_P$) in the coating liquid. It is because XPS measurement includes information of the foundation. More specifically, Li in the coating film and Li in the positive electrode active material particle may be detected. For example, when the covering rate is low and a great amount of area of the positive electrode active material particle is exposed, the amount of detected Li becomes high and thereby the particle surface composition ratio ($C_{Li}/C_P$) may increase.

12. The above-described (b) may include forming the composite particle by spray drying, for example.

Next, an embodiment of the present disclosure (which may also be simply called "the present embodiment" hereinafter) and an example of the present disclosure (which may also be simply called "the present example" hereinafter) will be described. It should be noted that neither the present embodiment nor the present example limits the technical scope of the present disclosure.

The foregoing and other objects, features, aspects and advantages of the present disclosure will become more apparent from the following detailed description of the present disclosure when taken in conjunction with the accompanying drawings.

BRIEF DESCRIPTION OF THE DRAWINGS

Fig. 1 is a conceptual view illustrating a composite particle according to the present embodiment.
Fig. 2 is a conceptual view illustrating an all-solid-state battery according to the present embodiment.
Fig. 3 is a schematic flowchart for a method of producing a composite particle according to the present embodiment.
Fig. 4 is a graph illustrating the relationship between particle surface composition ratio ($C_{Li}/C_P$) and initial resistance.

DESCRIPTION OF THE PREFERRED EMBODIMENTS

<Definitions of Terms, etc.>

Expressions such as "comprise", "include", and "have", and other similar expressions (such as "be composed of", for example) are open-ended expressions. In an open-ended expression, in addition to an essential component, an additional component may or may not be further included. The expression "consist of" is a closed-end expression. However, even when a closed-end expression is used, impurities present under ordinary circumstances as well as an additional element irrelevant to the technique according to the present disclosure are not excluded. The expression "consist essentially of" is a semiclosed-end expression. A semiclosed-end expression tolerates addition of an element that does not substantially affect the fundamental, novel features of the technique according to the present disclosure.
Expressions such as "may" and "can" are not intended to mean "must" (obligation) but rather mean "there is a possibility" (tolerance).
A singular form also includes its plural meaning, unless otherwise specified. For example, "a particle" may mean not only "one particle" but also "a group of particles (powder, particles)".
As for a plurality of steps, operations, processes, and the like that are included in various methods, the order for implementing those things is not limited to the described order, unless otherwise specified. For example, a plurality of steps may proceed simultaneously. For example, a plurality of steps may be implemented in reverse order.
A numerical range such as "from m to n%" includes both the upper limit and the lower limit, unless otherwise specified. That is, "from m to n%" means a numerical range of "not less than m% and not more than n%". Moreover, "not less than m% and not more than n%" includes "more than m% and less than n%". Further, any numerical value selected from a certain numerical range may be used as a new upper limit or a new lower limit. For example, any numerical value from a certain numerical range may be combined with any numerical value described in another location of the present specification or in a table or a drawing to set a new numerical range.
All the numerical values are regarded as being modified by the term "about". The term "about" may mean ±5%, ±3%, ±1%, and/or the like, for example. Each numerical value may be an approximate value that can vary depending on the implementation configuration of the technique according to the present disclosure. Each numerical value may be expressed in significant figures. Each measured value may be the average value obtained from multiple measurements performed. The number of measurements may be 3 or more, or may be 5 or more, or may be 10 or more. Generally, the greater the number of measurements is, the more reliable the average value is expected to be. Each measured value may be rounded off based on the number of the significant figures. Each measured value may include an error occurring due to an identification limit of the measurement apparatus, for example.
Any geometric term (such as "parallel", "vertical", and "perpendicular", for example) should not be interpreted solely in its exact meaning. For example, "parallel" may mean a geometric state that is deviated, to some extent, from exact "parallel". Any geometric term herein may include tolerances and/or errors in terms of design, operation, production, and/or the like. The dimensional relationship in each figure may not necessarily coincide with the actual dimensional relationship. The dimensional relationship (in length, width, thickness, and the like) in each figure may have been changed for the purpose of assisting the understanding of the technique according to the present disclosure. Further, a part of a configuration may have been omitted.
When a compound is represented by a stoichiometric composition formula (such as "$LiCoO_2$", for example), this stoichiometric composition formula is merely a typical example of the compound. The compound may have a non-stoichiometric composition. For example, when lithium cobalt oxide is represented as "$LiCoO_2$", the composition ratio of lithium cobalt oxide is not limited to "Li/Co/O = 1/1/2" but Li, Co, and O may be included in any composition ratio, unless otherwise specified. Further, doping with a trace element and/or substitution may also be tolerated.
"D50" refers to a particle size in volume-based particle size distribution at which cumulative frequency of particle sizes accumulated from the small size side reaches 50%. D50 may be measured by laser diffraction.

<<XPS Measurement>>

(Particle Surface Composition Ratio)

$C_{Li}/C_P$ in the expression (1) above may be measured by the procedure described below. An XPS apparatus is prepared. For example, an XPS apparatus "PHI X-tool" (trade name) manufactured by ULVAC-PHI (or a similar product) may be used. A sample powder consisting of the composite particle is loaded in the XPS apparatus. With a pass energy of 224 eV, narrow scan analysis is carried out. The measurement data is processed with an analysis software. For example, an analysis software "MulTiPak" (trade name) manufactured by ULVAC-PHI (or a similar product) may be used. The peak area of Li 1s spectrum (integral value) is converted to the concentration of Li element ($C_{Li}$). The peak area of P 2p spectrum is converted to the concentration of P element ($C_P$). $C_{Li}$ is divided by $C_P$ to give the particle surface composition ratio ($C_{Li}/C_P$).

(Covering Rate)

The covering rate is also measured by XPS. The above-described measurement data is analyzed, and thereby, from the peak area for each of C 1s, O 1s, P 2p, and M 2p3, the ratio of each element (the concentration of the element) is calculated.

The covering rate is calculated by the following expression (3):

$$\theta = P/(P + M) \times 100 \qquad (3)$$

In the above expression (3), $\theta$ represents the covering rate (%). Each of P and M represents the ratio of the corresponding element.

It should be noted that M in "M 2p3" and in the above expression (3) refers to a constituent element of the positive electrode active material particle other than Li or oxygen (O). That is, the positive electrode active material particle may be represented by the following formula (4):

$$LiMO_2 \qquad (4)$$

M may consist of one type of element, or may consist of a plurality of elements. M may be, for example, at least one selected from the group consisting of Ni, Co, Mn, and Al. When M includes a plurality of elements, the sum of the composition ratios of the elements may be 1.

For example, when the positive electrode active material particle is "$LiNi_{1/3}Co_{1/3}Mn_{1/3}O_2$", the above expression (3) may be changed into the following expression (3'):

$$\theta = P/(P + Ni + Co + Mn) \times 100 \qquad (3')$$

In the above expression (3'), Ni represents the ratio of nickel element calculated from the peak area for Ni 2p3, Co represents the ratio of cobalt element calculated from the peak area for Co 2p3, and Mn represents the ratio of manganese element calculated from the peak area for Mn 2p3.

<<Measurement of Film Thickness>>

The film thickness (the thickness of the coating film) may be measured by the procedure described below. A composite particle is embedded into a resin material to prepare a sample. With the use of an ion milling apparatus, a cross section of the sample is exposed. For example, an ion milling apparatus "Arblade (registered trademark) 5000" (trade name) manufactured by Hitachi High-Technologies (or a similar product) may be used. The cross section of the sample is examined by an SEM (Scanning Electron Microscope). For example, an SEM apparatus "SU8030" (trade name) manufactured by Hitachi High-Technologies (or a similar product) may be used. For each of ten composite particles, the film thickness is measured in twenty fields of view. The arithmetic mean of a total of 200 film thickness measurements is regarded as the film thickness.

<<Measurement of ICP>>

(Amount of Adhered P)

The mass fraction of P included in a composite particle (also called "the amount of adhered P", "the P content") may be measured by the procedure described below. Hydrochloric acid, nitric acid, and sulfuric acid are mixed to prepare a mixed acid. The mixing ratio is "(hydrochloric acid)/(nitric acid)/(sulfuric acid) = 2/3/1 (molar ratio)". The composite particle is dissolved in the mixed acid to prepare a solution. The solution in an amount of 0.01 g is diluted with 100 mL of deionized water to prepare a sample liquid. An aqueous solution of P (1000 ppm, 10000 ppm) is prepared. The aqueous solution in an amount of 0.01 g is diluted with deionized water to prepare a reference liquid. An ICP-AES (Inductively Coupled Plasma Atomic Emission Spectroscopy) apparatus is prepared. For example, an ICP-AES apparatus "ICPE-9800" (trade name) manufactured by Shimadzu (or a similar product) may be used. With the ICP-AES apparatus, the emission intensity of the reference liquid is measured. From the emission intensity of the reference liquid, a calibration curve is created. From the emission intensity of the sample liquid and the calibration curve, the mass fraction of P included in the composite particle is calculated.

(Mass Concentrations of Li, P, and Na in Coating Liquid)

The mass concentrations of Li, P, and Na in the coating liquid are measured by the procedure described below. The coating liquid in an amount of 0.01 g is diluted with deionized water to prepare 100 ml of a sample liquid. Aqueous solutions of Li, P, and Na (1000 ppm, 10000 ppm) are prepared. Each aqueous solution in an amount of 0.01 g is diluted with deionized water to prepare a reference liquid. An ICP-AES apparatus is prepared. With the ICP-AES apparatus, the emission intensity of the reference liquid is measured. From the emission intensity of the reference liquid, a calibration curve is created. With the ICP-AES apparatus, the emission intensity of the sample liquid (the diluted coating liquid) is measured. From the emission intensity of the sample liquid and the calibration curve, the mass concentration of each of Li, P, and Na in the coating liquid is calculated. Further, the mass concentration of each of Li and P is converted to molarity. The molarity of Li ($n_{Li}$) is divided by the molarity of P (np) to calculate the molar ratio ($n_{Li}/n_P$).

<Composite Particle>

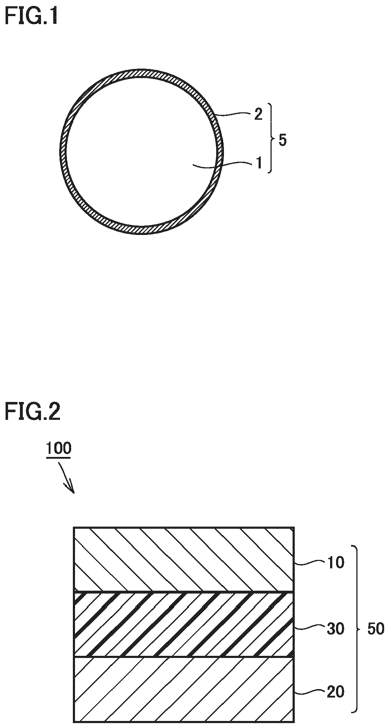

Fig. 1 is a conceptual view illustrating a composite particle according to the present embodiment. A composite particle 5 may also be called "a covered positive electrode active material", for example. Composite particle 5 includes a positive electrode active material particle 1 and a coating film 2. Composite particle 5 may be an aggregate, for example. That is, a single composite particle 5 may include two or more positive electrode active material particles 1. Composite particle 5 may have a D50 from 1 to 50 $\mu$m, or may have a D50 from 1 to 20 $\mu$m, or may have a D50 from 5 to 15 $\mu$m, for example.

Coating film 2 is a shell for composite particle 5. Coating film 2 covers at least part of a surface of positive electrode active material particle 1. Coating film 2 includes a phosphorus compound. Coating film 2 may include P, Li, O, carbon (C), and/or the like, for example. When coating film 2 includes a phosphorus compound, resistance increment is expected to be decreased.

Composite particle 5 may include P in a mass fraction from 6.1 to 6.5%, or may include P in a mass fraction from 6.1 to 6.2%, for example.

In composite particle 5, the particle surface composition ratio ($C_{Li}/C_P$) is 2.5 or less (see the expression (1) above). When the composition ratio ($C_{Li}/C_P$) is 2.5 or less, initial resistance may be markedly decreased. The composition ratio ($C_{Li}/C_P$) may be 2.44 or less, or may be 2.05 or less, or may be 1.73 or less, or may be 1.42 or less, for example. The composition ratio ($C_{Li}/C_P$) may be zero. The composition ratio ($C_{Li}/C_P$) may be 0.1 or more, or may be 0.5 or more, or may be 1.0 or more, for example. The composition ratio ($C_{Li}/C_P$) may be from 1.42 to 2.44, for example.

The covering rate may be 83% or more, for example. When the covering rate is 83% or more, initial resistance is expected to be decreased. The covering rate may be 85% or more, or may be 88% or more, or may be 91% or more, for example. The covering rate may be 100 %, or may be 99% or less, or may be 95% or less, for example. The covering rate may be from 83 to 91%, for example.

Coating film 2 may have a thickness from 5 to 100 nm, or may have a thickness from 5 to 50 nm, or may have a thickness from 10 to 30 nm, or may have a thickness from 20 to 30 nm, for example.

Positive electrode active material particle 1 is the core of composite particle 5. Positive electrode active material particle 1 may be a secondary particle (a group of primary particles). Positive electrode active material particle 1 (secondary particle) may have a D50 from 1 to 50 $\mu$m, or may have a D50 from 1 to 20 $\mu$m, or may have a D50 from 5 to 15 $\mu$m, for example. The primary particles may have a maximum Feret diameter from 0.1 to 3 $\mu$m, for example.

Positive electrode active material particle 1 may include any component.

Positive electrode active material particle 1 may include, for example, at least one selected from the group consisting of $LiCoO_2$, $LiNiO_2$, $LiMnO_2$, $LiMn_2O_4$, $Li(NiCoMn)O_2$, $Li(NiCoAl)O_2$, and $LiFePO_4$. "(NiCoMn)" in "$Li(NiCoMn)O_2$", for example, means that the constituents within the parentheses are collectively regarded as a single unit in the entire composition ratio. As long as (NiCoMn) is collectively regarded as a single unit in the entire composition ratio, the amounts of individual constituents are not particularly limited. $Li(NiCoMn)O_2$ may include $Li(Ni_{1/3}Co_{1/3}Mn_{1/3})O_2$, $Li(Ni_{0.5}Co_{0.2}Mn_{0.3})O_2$, $Li(Ni_{0.8}Co_{0.1}Mn_{0.1})O_2$, and/or the like, for example.

<All-Solid-State Battery>

Fig. 2 is a conceptual view illustrating an all-solid-state battery according to the present embodiment. An all-solid-state battery 100 may include an exterior package (not illustrated), for example. The exterior package may be a pouch made of aluminum laminated film, and/or the like, for example. The exterior package may accommodate a power generation element 50. Power generation element 50 includes a positive electrode 10, a separator layer 30, and a negative electrode 20. That is, all-solid-state battery 100 includes positive electrode 10, separator layer 30, and negative electrode 20.

<<Positive Electrode>>

Positive electrode 10 is of the layered form. For example, positive electrode 10 may include a positive electrode active material layer and a positive electrode current collector. For example, a positive electrode composite material may be applied to a surface of the positive electrode current collector to form the positive electrode active material layer. The positive electrode current collector may include an aluminum (Al) foil and/or the like, for example. The positive electrode current collector may have a thickness from 5 to 50 μm, for example.

The positive electrode active material layer may have a thickness from 10 to 200 μm, for example. The positive electrode active material layer is closely adhered to separator layer 30. The positive electrode active material layer includes a positive electrode composite material. The positive electrode composite material includes a composite particle and a sulfide-based solid electrolyte. That is, positive electrode 10 includes a composite particle and a sulfide-based solid electrolyte. The details of the composite particle are as described above.

The sulfide-based solid electrolyte may form an ion conduction path in the positive electrode active material layer. The amount of the sulfide-based solid electrolyte to be used may be, for example, from 1 to 200 parts by volume, or may be from 50 to 150 parts by volume, or may be from 50 to 100 parts by volume, relative to 100 parts by volume of the composite particle (the positive electrode active material). The sulfide-based solid electrolyte includes Li, P, and sulfur (S), for example. The sulfide-based solid electrolyte may further include O, silicon (Si), and/or the like, for example. The sulfide-based solid electrolyte may further include a halogen and/or the like, for example. The sulfide-based solid electrolyte may further include iodine (I), bromine (Br), and/or the like, for example. The sulfide-based solid electrolyte may be glass ceramic, or may be argyrodite, for example. The sulfide-based solid electrolyte may include, for example, at least one selected from the group consisting of $LiI-LiBr-Li_3PS_4$, $Li_2S-SiS_2$, $LiI-Li_2S-SiS_2$, $LiI-Li_2S-P_2S_5$, $LiI-Li_2O-Li_2S-P_2S_5$, $LiI-Li_2S-P_2O_5$, $LiI-Li_3PO_4-P_2S_5$, $Li_2S-P_2S_5$, and $Li_3PS_4$.

The positive electrode active material layer may further include a conductive material, for example. The conductive material may form an electron conduction path in the positive electrode active material layer. The amount of the conductive material to be used may be, for example, from 0.1 to 10 parts by mass relative to 100 parts by mass of the composite particle (the positive electrode active material). The conductive material may include any component. The conductive material may include, for example, at least one selected from the group consisting of carbon black, vapor grown carbon fiber (VGCF), carbon nanotube (CNT), and graphene flake.

The positive electrode active material layer may further include a binder, for example. The amount of the binder to be used may be, for example, from 0.1 to 10 parts by mass relative to 100 parts by mass of the composite particle (the positive electrode active material). The binder may include any component. The binder may include, for example, at least one selected from the group consisting of polyvinylidene difluoride (PVdF), vinylidene difluoride-hexafluoropropylene copolymer (PVDF-HFP), styrene-butadiene rubber (SBR), and polytetrafluoroethylene (PTFE).

<<Negative Electrode>>

Negative electrode 20 is a counter electrode for positive electrode 10. Negative electrode 20 is of the layered form. For example, negative electrode 20 may include a negative electrode active material layer and a negative electrode current collector. For example, a negative electrode composite material may be applied to a surface of the negative electrode current collector to form the negative electrode active material layer. The negative electrode current collector may include a copper (Cu) foil, a Ni foil, and/or the like, for example. The negative electrode current collector may have a thickness from 5 to 50 μm, for example.

The negative electrode active material layer may have a thickness from 10 to 200 $\mu$m, for example. The negative electrode active material layer is closely adhered to separator layer 30. The negative electrode active material layer includes a negative electrode composite material. The negative electrode composite material includes a negative electrode active material particle and a sulfide-based solid electrolyte. The negative electrode composite material may further include a conductive material and a binder. The negative electrode composite material and the positive electrode composite material may include the same type of, or different types of, sulfide-based solid electrolyte. The negative electrode active material particle may include any component. The negative electrode active material particle may include, for example, at least one selected from the group consisting of graphite, Si, silicon oxide [$SiO_x$ (0<x<2)], and $Li_4Ti_5O_{12}$.

«Separator Layer»

Separator layer 30 is interposed between positive electrode 10 and negative electrode 20. Separator layer 30 separates positive electrode 10 from negative electrode 20. Separator layer 30 includes a sulfide-based solid electrolyte. Separator layer 30 may further include a binder. Separator layer 30 and the positive electrode composite material may include the same type of, or different types of, sulfide-based solid electrolyte. Separator layer 30 and the negative electrode composite material may include the same type of, or different types of, sulfide-based solid electrolyte.

<Method of Producing Composite Particle>

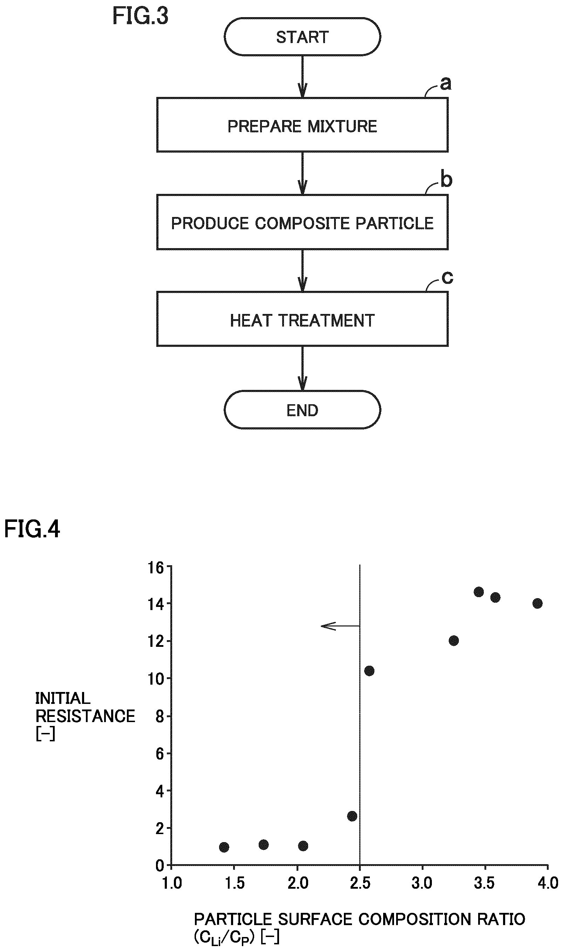

Fig. 3 is a schematic flowchart for a method of producing a composite particle according to the present embodiment. Hereinafter, "the method of producing a composite particle according to the present embodiment" may also be simply called "the present production method". The present production method includes "(a) preparing a mixture" and "(b) producing a composite particle". The present production method may further include "(c) heat treatment" and the like, for example.

<<(a) Preparing Mixture>>

The present production method includes preparing a mixture by mixing a coating liquid and a positive electrode active material particle. The details of the positive electrode active material particle are as described above. For example, the mixture may be a suspension, or may be a wet powder. For example, the suspension may be formed by dispersing the positive electrode active material particle (powder) in the coating liquid. For example, the wet powder may be formed by spraying the coating liquid into the powder. In the present production method, any mixing apparatus and/or any granulating apparatus may be used, for example.

The coating liquid includes a solute and a solvent. The solute includes a film material (a raw material of a coating film). The coating liquid may further include suspended matter (an insoluble component), sediment, and/or the like, for example.

The amount of the solute may be, for example, from 0.1 to 20 parts by mass, or may be from 1 to 15 parts by mass, or may be from 5 to 10 parts by mass, relative to 100 parts by mass of the solvent. As long as it can dissolve the solute, the solvent may include any component. The solvent may include water, alcohol, and/or the like, for example. The solvent may include ion-exchanged water and/or the like, for example.

The solute includes a phosphoric acid compound. The phosphoric acid compound may be $P_2O_5$ (phosphoric anhydride). $P_2O_5$ may be in the powder form. The phosphoric acid compound may be formed by mixing $P_2O_5$ with water. In this case, mixing $P_2O_5$ with water is carried out in such a manner that the mass fraction of $P_2O_5$ becomes 72% or more. That is, the phosphoric acid compound may include $P_2O_5$ in a mass fraction of 72% or more, with the remainder being made up of water. When $P_2O_5$ is 72% or more, the particle surface composition ratio ($C_{Li}/C_P$) is expected to be decreased. For example, the phosphoric acid compound may include 76% or more of $P_2O_5$, or may include 84% or more of $P_2O_5$, or may include 89% or more of $P_2O_5$ in a mass fraction. For example, the phosphoric acid compound may include $P_2O_5$ in a mass fraction from 76 to 89%. When the mass fraction of $P_2O_5$ decreases, the stability of the phosphoric acid compound (the pot life of the coating liquid) may be enhanced.

As long as it includes $P_2O_5$ in a mass fraction of 72% or more, the phosphoric acid compound may include any component. The phosphoric acid compound may include, for example, at least one selected from the group consisting of orthophosphoric acid, pyrophosphoric acid, metaphosphoric acid, and polyphosphoric acid. The metaphosphoric acid may include $P_2O_5$ in a mass fraction of 89%. The metaphosphoric acid may be in lumps. The polyphosphoric acid may include $P_2O_5$ in a mass fraction from 76 to 84%. The polyphosphoric acid may be a highly viscous liquid. The orthophosphoric acid may include $P_2O_5$ at 72%. The orthophosphoric acid may be liquid.

The phosphoric acid compound may include, for example, at least one selected from the group consisting of metaphosphoric acid and polyphosphoric acid. It is because metaphosphoric acid and polyphosphoric acid may include $P_2O_5$ in high concentrations. When the phosphoric acid compound includes metaphosphoric acid and polyphosphoric acid, the particle surface composition ratio ($C_{Li}/C_P$) is expected to be decreased.

The solute may further include sodium (Na). When Na is dissolved in the coating liquid, the stability of the phosphoric acid compound may be enhanced. The Na concentration (mass concentration) of the coating liquid may be from 0 to 1%, for example. The Na concentration may be 0.6% or less, or may be 0.5% or less, for example. The Na concentration may be from 0.5 to 0.6%, for example.

The solute may further include a lithium compound. The solute may include lithium hydroxide, lithium carbonate, lithium nitrate, and/or the like, for example. the molar ratio of Li to P ($n_{Li}/n_P$) may be less than 1.1, for example (see the above expression (2)). When the molar ratio ($n_{Li}/n_P$) is less than 1.1, the particle surface composition ratio ($C_{Li}/C_P$) is expected to be decreased. The molar ratio ($n_{Li}/n_P$) may be 1.07 or less, or may be 0.45 or less, or may be zero, for example. The molar ratio ($n_{Li}/n_P$) may be from 0 to 0.45, or may be from 0.45 to 1.07, for example.

<<(b) Producing Composite Particle>>

The present production method includes producing a composite particle by drying the mixture. When the coating liquid adhered to the surface of the positive electrode active material particle is dried, a coating film is produced. In the present production method, any drying method may be employed.

For example, spray drying may be employed to form the composite particle. More specifically, a suspension is sprayed from a nozzle to form droplets. The droplets include the positive electrode active material particle and the coating liquid. For example, the droplets may be dried by the use of hot air to form the composite particle. The use of spray drying is expected to enhance the covering rate, for example.

The solid content (volume fraction) of the suspension for use in the spray drying may be from 1 to 50 %, or may be from 10 to 30%, for example. The diameter of the nozzle may be from 0.1 to 10 mm, or may be from 0.1 to 1 mm, for example. The temperature of the hot air may be from 100 to 200°C, for example.

For example, a tumbling fluidized-bed coating apparatus may be used to produce the composite particle. Such a tumbling fluidized-bed coating apparatus is capable of performing "(a) preparing a mixture" and "(b) producing a composite particle" at the same time.

<<(c) Heat Treatment>>

The present production method may include subjecting the composite particle to heat treatment. The heat treatment allows the coating film to be fixed. The heat treatment may also be called "calcination". In the present production method, any heat treatment apparatus may be used. The heat treatment temperature may be from 150 to 300°C, for example. The duration of the heat treatment may be from 1 to 10 hours, for example. The heat treatment may be carried out in the air, or the heat treatment may be carried out in an inert atmosphere, for example.

[Examples]

<Producing All-Solid-State Battery>

In the manner described below, composite particles, positive electrodes, and all-solid-state batteries according to Nos. 1 to 10 were produced. Hereinafter, "a composite particle according to No. 1" may also be simply called "No. 1", for example.

<<No. 1>>

To 166 parts by mass of ion-exchanged water, 10.8 parts by mass of orthophosphoric acid (85%, manufactured by Kishida Chemical) was dissolved to prepare a coating liquid. Into the resulting coating liquid, lithium hydroxide mono-hydrate ($LiOH \cdot H_2O$) was further dissolved so that the molar ratio ($n_{Li}/n_P$) became 0.45.

As a positive electrode active material particle, $Li(Ni_{1/3}Co_{1/3}Mn_{1/3})O_2$ was prepared. 50 parts by mass of the positive electrode active material particle in the powder form was dispersed in 53.7 parts by mass of the coating liquid to prepare a suspension. A spray dryer "Mini Spray Dryer B-290" (trade name) manufactured by BUCHI was prepared. The suspension was fed into the spray dryer, and thereby powder of a composite particle was produced. The temperature of air supplied by the spray dryer was 200°C, and the amount of air supply was 0.45 m³/min. The composite particle was subjected to heat treatment in the air. The temperature of the heat treatment was 200°C. The duration of the heat treatment was 5 hours. By the above-described procedure, the particle surface composition ratio ($C_{Li}/C_P$), the covering rate, and the amount of adhered P were measured. Results are shown in Table 1 below.

The below materials were prepared.

Sulfide-based solid electrolyte: 10LiI-15LiBr-75Li$_3$PS$_4$
Conductive material: VGCF
Binder: SBR
Dispersion medium: heptane
Positive electrode current collector: Al foil

The composite particle, the sulfide-based solid electrolyte, the conductive material, the binder, and the dispersion medium were mixed together to prepare a positive electrode slurry. The mixing ratio between the composite particle and the sulfide-based solid electrolyte was "(composite particle)/(sulfide-based solid electrolyte) = 6/4 (volume ratio)". The amount of the conductive material used was 3 parts by mass relative to 100 parts by mass of the composite particle. The amount of the binder used was 3 parts by mass relative to 100 parts by mass of the composite particle. The positive electrode slurry was sufficiently stirred with the use of an ultrasonic homogenizer. The positive electrode slurry was applied to a surface of the positive electrode current collector to form a coat film. The resulting coat film was dried on a hot plate at 100°C for 30 minutes. In this way, a positive electrode raw sheet were produced. From the resulting positive electrode raw sheet, a disk-shaped positive electrode was cut out. The area of the positive electrode was 1 cm$^2$.

A negative electrode and a separator layer were prepared. Negative electrode active material particles were graphite. The positive electrode, the separator layer, and the negative electrode included the same type of sulfide-based solid electrolyte. The positive electrode, the separator layer, and the negative electrode were stacked inside a cylindrical jig to form a stack. The resulting stack was pressed to form a power generation element. A terminal was connected to the power generation element to form an all-solid-state battery.

«No. 2»

To 50 parts by mass of ion-exchanged water, 2.7 parts by mass of lithium metaphosphate (LiPO$_3$, manufactured by Mitsuwa Chemicals) was dissolved to prepare a coating liquid. Except this, the same procedure as in No. 1 was carried out to produce a composite particle, a positive electrode, and an all-solid-state battery.

«No. 3 »

A dry particle composing machine "Nobilta" (trade name) manufactured by Hosokawa Micron was prepared. With this dry particle composing machine, 50 parts by mass of a positive electrode active material particle and 2.7 parts by mass of lithium orthophosphate (Li$_3$PO$_4$) were mixed to form a composite particle. All the subsequent procedures were carried out in the same manner as in No. 1 to produce a positive electrode and an all-solid-state battery.

«No. 4»

To 500 parts by mass of ion-exchanged water, 31.6 parts by mass of orthophosphoric acid (85%, manufactured by Kishida Chemical) was dissolved to prepare a coating liquid. Separately from this, to 500 parts by mass of ion-exchanged water, 34.5 parts by mass of lithium hydroxide monohydrate was dissolved to prepare a lithium hydroxide aqueous solution.

A tumbling fluidized coating apparatus "MP-01" (trade name) manufactured by Powrex was prepared. To 1000 parts by mass of a positive electrode active material particle, the lithium hydroxide aqueous solution and the coating liquid were sequentially sprayed to form a composite particle. The composite particle was subjected to heat treatment in the air. The temperature of the heat treatment was 200°C. The duration of the heat treatment was 5 hours. All the subsequent procedures were carried out in the same manner as in No. 1 to produce a positive electrode and an all-solid-state battery.

«No. 5»

To 166 parts by mass of ion-exchanged water, 10.8 parts by mass of orthophosphoric acid (85%, manufactured by Kishida Chemical) was dissolved to prepare a coating liquid. Into the resulting coating liquid, lithium nitrate was further dissolved so that the molar ratio ($n_{Li}/n_P$) became 3.00. All the subsequent procedures were carried out in the same manner as in No. 1 to produce a composite particle, a positive electrode, and an all-solid-state battery.

«No. 6»

870.4 parts by mass of a hydrogen peroxide solution (mass concentration, 30%) was placed in a vessel. Then, to the vessel, 987.4 parts by mass of ion-exchanged water, 44.2 parts by mass of niobic acid [Nb$_2$O$_5$·3H$_2$O] were added.

Then, to the vessel, 87.9 parts by mass of an aqueous ammonia solution (mass concentration, 28%) was added. The content of the vessel was sufficiently stirred to form a coating liquid. The resulting coating liquid is expected to include a peroxo complex of Nb. All the subsequent procedures were carried out in the same manner as in No. 1 to produce a composite particle, a positive electrode, and an all-solid-state battery.

«No. 7»

To 166 parts by mass of ion-exchanged water, 10.8 parts by mass of metaphosphoric acid (manufactured by FUJIFILM Wako Pure Chemical) was dissolved to prepare a coating liquid. Into the resulting coating liquid, lithium hydroxide monohydrate was further dissolved so that the molar ratio ($n_{Li}/n_P$) became 0.45. All the subsequent procedures were carried out in the same manner as in No. 1 to produce a composite particle, a positive electrode, and an all-solid-state battery.

«No. 8»

A composite particle, a positive electrode, and an all-solid-state battery were produced in the same manner as in No. 7 except that no lithium hydroxide monohydrate was added to the coating liquid.

«No. 9»

A composite particle, a positive electrode, and an all-solid-state battery were produced in the same manner as in No. 7 except that the amount of lithium hydroxide monohydrate added to the coating liquid was changed and, as a result, the molar ratio ($n_{Li}/n_P$) was changed.

<<No. 10»

To 166 parts by mass of ion-exchanged water, 10 parts by mass of polyphosphoric acid "polyphosphoric acid-116T (manufactured by Nippon Chemical Industrial)" (trade name) was dissolved to prepare a coating liquid. All the subsequent procedures were carried out in the same manner as in No. 7 to produce a composite particle, a positive electrode, and an all-solid-state battery.

<Evaluation>

The initial resistance of the all-solid-state battery was measured. Results are shown in Table 1 below. The values of initial resistance in Table 1 below are relative values. The initial resistance for No. 7 is defined as 1.
Under the conditions described below, an endurance test (a high-temperature storage test) of the all-solid-state battery was carried out.

Storage temperature (the temperature setting for the thermostatic chamber): 60°C
Battery voltage at the start of storage: 4.5 V
Storage duration: 14 days

The resistance after the endurance test was divided by the initial resistance to determine the resistance increment. Results are shown in Table 1 below. For Nos. 1 to 5, resistance increment was not measured because the initial resistance was very high.

[Table 1]

Table 1

| No. | Coating liquid | | | Coating method | Composite particle | | | All-solid-state battery | |
|---|---|---|---|---|---|---|---|---|---|
| | Solute | | | | XPS particle surface composition ratio ($C_{Li}/C_P$) [-] | XPS covering rate [%] | ICP Amount of adhered P [%]*2 | Initial resistance [-]*3 | Resistance increment [-]*4 |
| | Type | $P_2O_5$ concentration [%]*2 | ICP molar ratio ($n_{Li}/n_P$) [-] | | | | | | |
| 1 | Orthophosphoric acid | 72 | 0.45 | Spray drying | 2.58 | 80 | 6.5 | 10.42 | - |
| 2 | Lithium metaphosphate | - | 1.00 | Spray drying | 3.58 | 68 | 5.7 | 14.34 | - |
| 3 | Lithium orthophosphate*1 | - | 3.00 | Dry mechanochemical | 3.25 | 88 | 7.6 | 12.02 | - |
| 4 | Orthophosphoric acid | 72 | 3.00 | Tumbling fluidized | 3.45 | 60 | 5.9 | 14.58 | - |
| 5 | Orthophosphoric acid | 72 | 3.00 | Spray drying | 3.92 | 80 | 5.9 | 14.02 | - |
| 6 | Peroxo complex of Nb | - | - | Spray drying | - | 90 | - | 0.85 | 1.35 |
| 7 | Metaphosphoric acid | 89 | 0.45 | Spray drying | 1.42 | 88 | 6.1 | 1 | 1.23 |
| 8 | Metaphosphoric acid | 89 | 0 | Spray drying | 1.73 | 83 | 6.2 | 1.12 | 1.20 |
| 9 | Metaphosphoric acid | 89 | 1.05 | Spray drying | 2.05 | 91 | 6.1 | 1.04 | 1.17 |
| 10 | Polyphosphoric acid | 85 | 0.45 | Spray drying | 2.44 | 85 | 6.2 | 2.64 | 1.30 |

* 1: In No. 3, coating (solid phase reaction) was carried out with lithium orthophosphate powder, instead of coating liquid.
*2: Values are in mass concentration (mass fraction).
*3: Values are relative to the initial resistance for No. 7, which is regarded as 1.
*4: Values are the ratio of post-endurance resistance to initial resistance.

<Results>

Fig. 4 is a graph illustrating the relationship between particle surface composition ratio ($C_{Li}/C_P$) and initial resistance. At a particle surface composition ratio ($C_{Li}/C_P$) of 2.5 or less, initial resistance markedly decreased.

No. 6 exhibited a low initial resistance. On the other hand, No. 6 exhibited a high resistance increment. The coating film according to No. 6 includes a niobium compound. Nos. 7 to 10 exhibited low initial resistance and low resistance increment. The coating films according to Nos. 7 to 10 include a phosphorus compound.

<Aspects>

The present embodiment and the present example also support the following coating liquid.

1. A coating liquid includes a phosphoric acid compound and a solvent. The phosphoric acid compound includes diphosphorus pentoxide in a mass fraction of 72% or more.
2. The phosphoric acid compound may include diphosphorus pentoxide in a mass fraction of 72% or more, with the remainder being made up of water.
3. The phosphoric acid compound may include at least one selected from the group consisting of metaphosphoric acid and polyphosphoric acid.
4. The coating liquid may satisfy a relationship of the following expression (2):

$$0 \leq n_{Li}/n_P < 1.1 \qquad (2)$$

where $n_{Li}$ represents a molarity of lithium in the coating liquid, and $n_P$ represents a molarity of phosphorus in the coating liquid.

The present embodiment and the present example are illustrative in any respect. The present embodiment and the present example are non-restrictive. The technical scope of the present disclosure encompasses any modifications within the meaning and the scope equivalent to the terms of the claims. For example, it is expected that certain configurations of the present embodiments and the present examples can be optionally combined.

**Claims**

1. A composite particle comprising:

   a positive electrode active material particle (1); and
   a coating film (2), wherein
   the coating film (2) covers at least part of a surface of the positive electrode active material particle (1),
   the coating film (2) includes a phosphorus compound, and
   a relationship of the following expression (1):

$$C_{Li}/C_P \leq 2.5 \qquad (1)$$

   is satisfied,
   where

   $C_{Li}$ represents a concentration of lithium element calculated from a peak area of a Li 1s spectrum measured by X-ray photoelectron spectroscopy, and
   $C_P$ represents a concentration of phosphorus element calculated from a peak area of a P 2p spectrum measured by X-ray photoelectron spectroscopy.

2. The composite particle according to claim 1, wherein

   a covering rate is 83% or more, and
   the covering rate is measured by X-ray photoelectron spectroscopy.

3. The composite particle according to claim 1 or 2, wherein phosphorus is included in a mass fraction from 6.1 to 6.5%.

4. A positive electrode comprising:

a composite particle (5); and
a sulfide-based solid electrolyte, wherein
the composite particle (5) includes a positive electrode active material particle (1) and a coating film (2),
the coating film (2) covers at least part of a surface of the positive electrode active material particle (1),
the composite particle (5) satisfies a relationship of the following expression (1):

$$C_{Li}/C_P \leq 2.5 \qquad (1)$$

where

$C_{Li}$ represents a concentration of lithium element calculated from a peak area of a Li 1s spectrum measured by X-ray photoelectron spectroscopy, and
$C_P$ represents a concentration of phosphorus element calculated from a peak area of a P 2p spectrum measured by X-ray photoelectron spectroscopy.

5. The positive electrode according to claim 4, wherein

the composite particle (5) has a covering rate of 83% or more, and
the covering rate is measured by X-ray photoelectron spectroscopy.

6. The positive electrode according to claim 4 or 5, wherein the composite particle (5) includes phosphorus in a mass fraction from 6.1 to 6.5%.

7. An all-solid-state battery comprising the positive electrode (10) according to any one of claims 4 to 6.

8. A method of producing a composite particle, the method comprising:

(a) preparing a mixture by mixing a coating liquid and a positive electrode active material particle (1); and
(b) producing a composite particle (5) by drying the mixture, wherein

the coating liquid includes a phosphoric acid compound and a solvent, and
the phosphoric acid compound includes diphosphorus pentoxide in a mass fraction of 72% or more.

9. The method of producing a composite particle according to claim 8, wherein the phosphoric acid compound includes diphosphorus pentoxide in a mass fraction of 72% or more, with the remainder being made up of water.

10. The method of producing a composite particle according to claim 8 or 9, wherein the phosphoric acid compound includes at least one selected from the group consisting of metaphosphoric acid and polyphosphoric acid.

11. The method of producing a composite particle according to any one of claims 8 to 10, wherein the coating liquid satisfies a relationship of the following expression (2):

$$0 \leq n_{Li}/n_P < 1.1 \qquad (2)$$

where

$n_{Li}$ represents a molarity of lithium in the coating liquid, and
$n_P$ represents a molarity of phosphorus in the coating liquid.

12. The method of producing a composite particle according to any one of claims 8 to 11, wherein the (b) includes forming the composite particle (5) by spray drying.

FIG.1

FIG.2

FIG.3

START

↓

PREPARE MIXTURE /a

↓

PRODUCE COMPOSITE PARTICLE /b

↓

HEAT TREATMENT /c

↓

END

FIG.4

INITIAL RESISTANCE [−]

PARTICLE SURFACE COMPOSITION RATIO $(C_{Li}/C_P)$ [−]

Europäisches
Patentamt

European
Patent Office

Office européen
des brevets

# EUROPEAN SEARCH REPORT

Application Number

EP 23 15 7587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/170494 A1 (PAULSEN JENS [KR] ET AL) 19 June 2014 (2014-06-19) * paragraphs [0066], [0099], [0102]; examples 1,4,6; table 4 * | 1-11 | INV. H01M4/04 H01M4/131 H01M4/1391 H01M4/505 |
| X | US 2017/077510 A1 (ZHANG WEN [JP] ET AL) 16 March 2017 (2017-03-16) * paragraphs [0031], [0034], [0035], [0098]; tables 1,2 * | 1,7 | H01M4/36 H01M4/62 H01M10/0525 H01M10/0562 |
| X | US 2015/311510 A1 (YOSHIDA YUSUKE [JP] ET AL) 29 October 2015 (2015-10-29) * paragraphs [0120], [0121], [0132]; example 1; table 1 * | 1,7 | |
| X | US 2019/097238 A1 (HONG MING-ZI [KR] ET AL) 28 March 2019 (2019-03-28) * example 1 * | 8,9,11 | |
| X | US 2018/190976 A1 (BLANGERO MAXIME [KR] ET AL) 5 July 2018 (2018-07-05) * paragraph [0078]; example 2 * | 8,9,11,12 | TECHNICAL FIELDS SEARCHED (IPC) H01M |

The present search report has been drawn up for all claims

| Place of search | Date of completion of the search | Examiner |
|---|---|---|
| Munich | 12 July 2023 | Raimondi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 7587

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2023

| Patent document cited in search report | | Publication date | Patent family member(s) | | Publication date |
|---|---|---|---|---|---|
| US 2014170494 | A1 | 19-06-2014 | CN | 103443975 A | 11-12-2013 |
| | | | EP | 2695225 A1 | 12-02-2014 |
| | | | JP | 5989087 B2 | 07-09-2016 |
| | | | JP | 2014513392 A | 29-05-2014 |
| | | | KR | 20130135356 A | 10-12-2013 |
| | | | TW | 201246673 A | 16-11-2012 |
| | | | US | 2014170494 A1 | 19-06-2014 |
| | | | WO | 2012136473 A1 | 11-10-2012 |
| US 2017077510 | A1 | 16-03-2017 | CN | 106953067 A | 14-07-2017 |
| | | | JP | 6523113 B2 | 29-05-2019 |
| | | | JP | 2017059302 A | 23-03-2017 |
| | | | US | 2017077510 A1 | 16-03-2017 |
| US 2015311510 | A1 | 29-10-2015 | CN | 104781965 A | 15-07-2015 |
| | | | EP | 2919303 A1 | 16-09-2015 |
| | | | JP | 6309456 B2 | 11-04-2018 |
| | | | JP | WO2014073652 A1 | 08-09-2016 |
| | | | KR | 20150084995 A | 22-07-2015 |
| | | | US | 2015311510 A1 | 29-10-2015 |
| | | | WO | 2014073652 A1 | 15-05-2014 |
| US 2019097238 | A1 | 28-03-2019 | US | 2017200951 A1 | 13-07-2017 |
| | | | US | 2019097238 A1 | 28-03-2019 |
| US 2018190976 | A1 | 05-07-2018 | CN | 107810570 A | 16-03-2018 |
| | | | CN | 113611821 A | 05-11-2021 |
| | | | EP | 3317909 A1 | 09-05-2018 |
| | | | JP | 6707568 B2 | 10-06-2020 |
| | | | JP | 2018524776 A | 30-08-2018 |
| | | | KR | 20180014841 A | 09-02-2018 |
| | | | TW | 201707261 A | 16-02-2017 |
| | | | US | 2018190976 A1 | 05-07-2018 |
| | | | WO | 2017002057 A1 | 05-01-2017 |

EPO FORM P0459

For more details about this annex : see Official Journal of the European Patent Office, No. 12/82

**EP 4 231 373 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022025760 A

- JP 2012099323 A